Europäisches Patentamt

**European Patent Office**

Office européen des brevets

(11) Numéro de publication: **0 264 328 B1**

# (12) FASCICULE DE BREVET EUROPEEN

(45) Date de publication de fascicule du brevet:
**14.08.91**

(51) Int. Cl.⁵: **A01F 15/00**

(21) Numéro de dépôt: **87402243.7**

(22) Date de dépôt: **08.10.87**

(54) **Dispositif d'éjection d'une balle formée dans une presse à balles cylindriques.**

(30) Priorité: **09.10.86 FR 8614047**

(43) Date de publication de la demande:
**20.04.88 Bulletin 88/16**

(45) Mention de la délivrance du brevet:
**14.08.91 Bulletin 91/33**

(84) Etats contractants désignés:
**DE ES GB IT**

(56) Documents cités:
**EP-A- 0 104 510
EP-A- 0 110 056
EP-A- 0 217 715
DE-A- 3 247 661
GB-A- 2 114 505**

(73) Titulaire: **HESSTON BRAUD**

**F-85220 COEX(FR)**

(72) Inventeur: **Berthet, Jean-Paul**
**7 bld du Sud**
**F-85470 Bretignolle Sur Mer(FR)**
Inventeur: **Simonneau, Gaston**
**St Reverand**
**F-85220 Coex(FR)**
Inventeur: **Mathis, Michel**
**3 rue Edmond Rostand**
**F-85300 Challans(FR)**

(74) Mandataire: **Clanet, Denis et al**
**Cabinet Beau de Loménie 55, rue d'Amsterdam**
**F-75008 Paris(FR)**

## Description

La présente invention concerne un dispositif d'éjection d'une balle dans une presse à balles cylindriques.

Les presses à balles de ce type sont généralement utilisées pour la formation de balles sensiblement cylindriques, dites balles rondes, de végétaux ramassés sur le sol. Ces presses habituellement attelées à un tracteur comportent des moyens de ramassage et d'approvisionnement en végétaux, une chambre de formation de la balle qui comprend des courroies d'entraînement en rotation de la balle en cours de formation, un dispositif de liage de la balle terminée et des moyens d'évacuation de la balle hors de la chambre de formation. Ces moyens d'évacuation comportent une porte arrière pivotante à ouverture commandée pour laisser le passage à la balle qui sort de la chambre de formation vers l'arrière de la machine. L'ouverture de la porte est généralement commandée par des vérins hydrauliques. Les presses de ce type sont couramment pourvues de dispositifs destinés à faciliter la sorte de la balle hors de la machine.

Plusieurs dispositifs de ce type, souvent appelés "éjecteurs", sont connus. Dans la plupart des cas, ces dispositifs ont pour but, outre de faciliter la sortie de la balle, de faire rouler ladite balle suffisamment loin derrière la machine et de la maintenir éloignée de façon à pouvoir refermer la porte arrière sans que celle-ci ne heurte la balle déposée au sol. Un dispositif éjecteur de ce type est en particulier décrit dans le document FR-A-2583608 dont le titulaire est le même que celui de la présente invention.

Une presse comportant un dispositif de ce type est également décrite dans le document FR-A-2 521 390. Cette presse comporte en outre un organe de retenue de la balle constitué d'un tube qui s'étend parallèlement à l'axe de la balle et qui vient se placer sous la balle, dès l'ouverture de la porte, pour éviter que la balle ne se coince dans la partie basse du châssis avant d'être en position d'évacuation sur les bras du dispositif d'éjection et de maintien en position éloignée de la balle.

Ces divers dispositifs facilitent l'évacuation et l'éloignement de la balle dès lors qu'elle est au moins partiellement sortie de la chambre de formation. Cependant, ils ne permettent pas de dégager la balle de ladite chambre si cette balle se trouve coincée, en particulier entre les deux parois latérales de la machine. Or ce coincement se produit fréquemment car la balle en cours de formation est diamétralement comprimée, et les végétaux exercent de ce fait une pression sur les parois latérales, qui tend à bloquer la balle dans la chambre de formation. Lors de l'ouverture de la porte, la balle ne s'évacue pas et l'opérateur est obligé de réaliser plusieurs manoeuvres pour l'éjection, ce qui représente une grande perte de temps.

Pour remédier à ce problème, il est donc nécessaire d'exercer sur la balle un effort dirigé vers l'arrière pour pousser celle-ci hors de la machine. Un dispositif pouvant exercer cette action est décrit dans le document FR-A-2 558 031. Selon ce document, les parois latérales internes de la presse font partie de la porte arrière et donc se relèvent lors de l'ouverture de la porte pivotante vers le haut. Une barre d'expulsion, qui relie les deux parois latérales, exerce sur la balle une action sensiblement horizontale vers l'arrière ou obliquement vers le bas, lors de l'ouverture de la porte. Cet effort est cependant important car la balle a tendance à être retenue par son poids dans le creux formé par les courroies d'entraînement à la partie basse de la machine. Un dispositif supplémentaire est prévu dans la porte, au cas où la balle resterait bloquée entre les parois latérales, mais ce dispositif est complexe et de plus, dans le cas ci-dessus, le poids d'une balle, qui resterait coincée entre les parois latérales internes liées à la porte lors de son ouverture, entraînerait un effort important nécessaire pour relever ladite porte. En outre, les efforts latéraux exercés par la balle sur les parois latérales internes peuvent déformer celles-ci et on risque de se trouver confronté à des problèmes de coincement entre les parois latérales fixes externes lors de la fermeture ou de l'ouverture de la porte.

Le but de la présente invention est de résoudre les problèmes d'extraction de la balle hors de la chambre de formation par des moyens simples et fiables.

A cet effet, il est proposé un autre dispositif d'éjection comportant un éjecteur constitué d'une barre ou d'un tube s'étendant parallèlement à l'axe de balle et pouvant être actionné pour exercer une force dirigée vers l'ouverture arrière de sortie de la balle.

Selon l'invention, le dispositif est caractérisé par les caractéristiques dans la revendication 1.

Un avantage du dispositif selon l'invention est que, en exerçant sur la balle un effort à la fois vers le haut et vers l'arrière, on oblige la balle à sortir hors de la chambre de formage et donc en lui communiquant une certaine quantité d'énergie, on assure une éjection rapide de celle-ci.

De préférence, l'éjecteur est actionné seulement lorsque la porte est au moins presque totalement ouverte.

Un autre avantage alors est que l'éjection est réalisée seulement lorsque la porte est déjà ouverte, celle-ci ne risquant donc plus de créer un obstacle à une sortie rapide de la balle. De plus, l'énergie utilisée pour l'éjection est indépendante de celle nécessaire à l'ouverture de la porte.

D'autre caractéristiques et avantages apparaîtront au cours de la description qui va être faite d'un mode particulier de réalisation de l'invention.

On se réfèrera aux dessins annexés dans lesquels :
- la figure 1 est une vue d'une presse à balles rondes en fin de formation de la balle montrant le dispositif d'éjection dans sa position de repos ;
- la figure 2 est une vue de la même presse à balle en position d'éjection de balle, c'est-à-dire porte arrière ouverte, machine relevée et dispositif éjecteur en position de travail ;
- la figure 3 est une vue en perspective d'un mode de réalisation de l'ensemble d'éjection commandé par un vérin et rappelé par ressort, représenté en position de travail ;
- la figure 4 est un schéma d'un circuit hydraulique de la presse avec commande par un seul distributeur double effet ; et
- la figure 5 est un autre schéma hydraulique avec commande par un distributeur double effet et un distributeur simple effet.

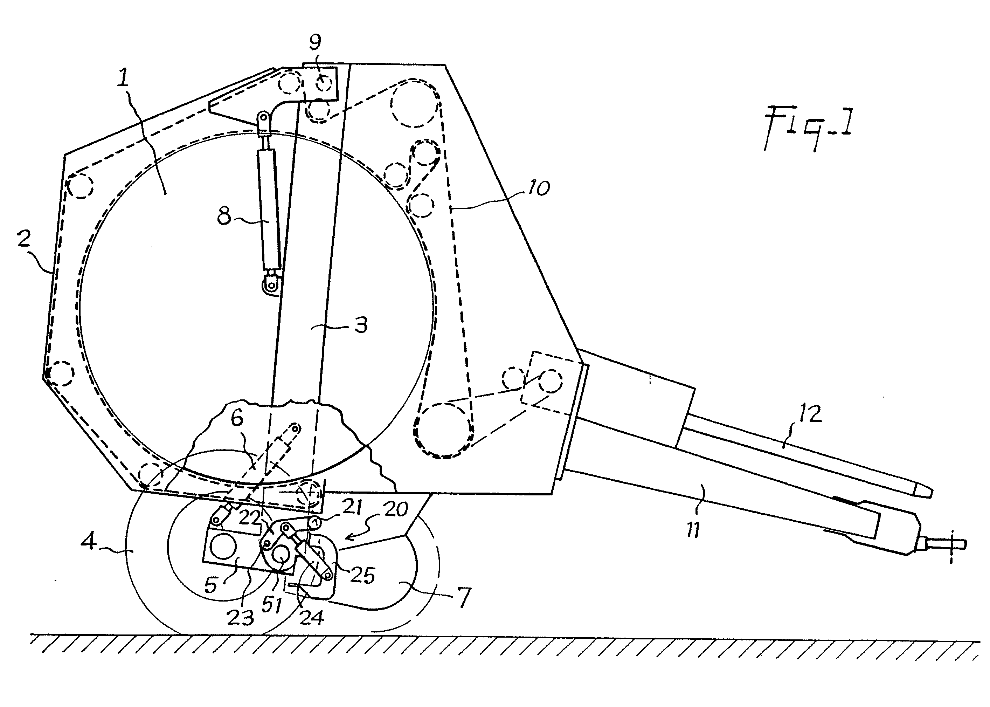

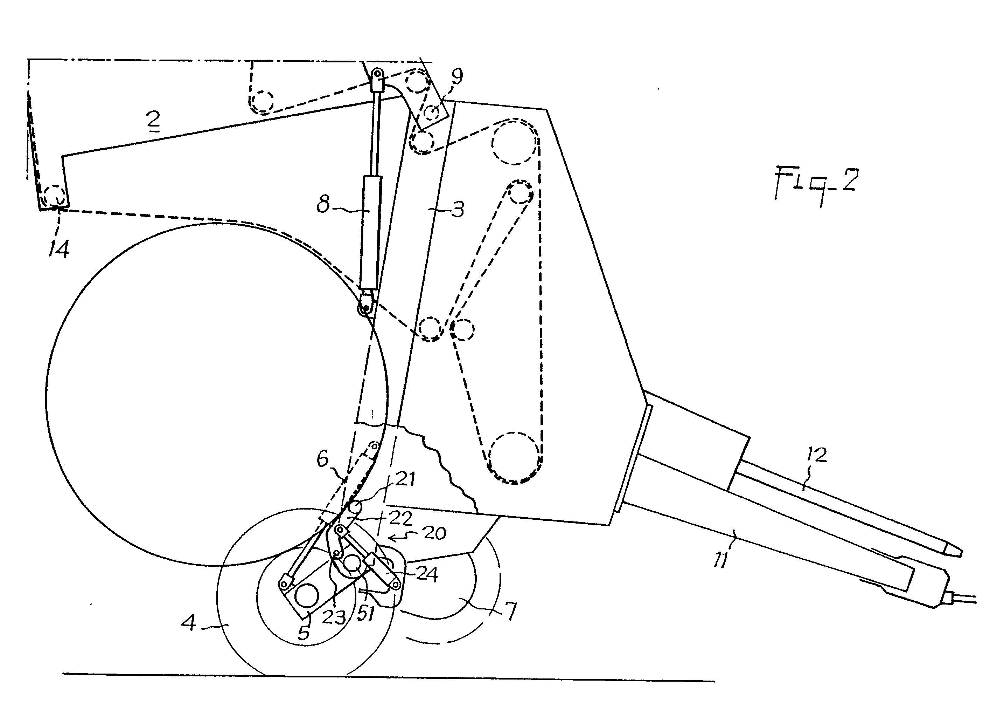

La presse à balle représentée sur les figures 1 et 2 comporte des moyens d'attelage 11 à un tracteur et une transmission 12, reliée à la prise de force du tracteur qui entraîne les différents organes rotatifs de la machine (dispositif de ramassage 7 et courroies 10 d'entraînement en rotation de la balle). La presse comporte aussi un châssis constitué de deux montants verticaux 3 au bas desquels sont articulés en 51 des bras de relevage 5 portant les moyeux des roues 4. Des vérins de relevage 6 sont articulés, d'une part sur le châssis 3 et d'autre part sur les bras de relevage 5, et peuvent être alimentés en fluide hydraulique sous pression pour relever la presse.

Des moyens de ramassage 7 destinés à collecter les végétaux déposés en andains sur le sol et à en alimenter la presse sont disposés en avant des roues, dans le sens de l'avance de la machine. Les produits de récolte ainsi ramassés sont entraînés en nappe dans une chambre de formation 1 de la balle où ils subissent de manière connue un enroulement sous l'action d'organes tels que rouleau x, bandes ou courroies 10 entraînés par la transmission 12 pour former une balle cylindrique par enroulement de ladite nappe sur elle-même.

La presse comporte également une porte arrière 2 s'ouvrant vers l'arrière et vers le haut par pivotement autour d'un axe 9 situé à l'extrémité supérieure du châssis 3. La porte arrière 2 est actionnée par des vérins hydrauliques 8 articulés d'une part sur le châssis 3, d'autre part sur ladite porte, qui peuvent être alimentés en fluide hydraulique sous pression pour ouvrir la porte 2. Lorsque la balle a atteint le diamètre requis, celle-ci subit un liage et elle est déchargée lors de l'ouverture de la porte arrière 2.

On ne décrira pas plus en détail la machine, celle-ci étant d'un type connu. Pour plus de précisions, on pourra se reporter aux documents cités dans la première partie de ce mémoire.

A la figure 1, la presse est représentée en position basse et porte arrière fermée, ce qui correspond à la position de formation de la balle. A la figure 2, la presse est représentée porte ouverte et en position relevée, c'est-à-dire lorsque les vérins de relevage 6 et d'ouverture de porte 8 sont alimentés en fluide hydraulique sous pression, pour procéder à l'évacuation de la balle terminée.

Le dispositif d'éjection 20 situé en dessous de la chambre de formation comporte un tube 21 qui s'étend parallèlement à l'axe de la balle en cours de formation. Ce tube est fixé à une extrémité de leviers coudés 22 articulés par leur autre extrémité sur l'extrémité inférieure des montants du châssis 3. L'axe d'articulation 23 des leviers 22 est parallèle au tube 21 et situé légèrement en arrière et en dessous de l'articulation 51 des bras de relevage 5.

A partir de l'axe d'articulation 23, les leviers coudés 22 s'étendent vers le haut pour contourner l'articulation 51 (lorsque le dispositif d'éjection est au repos, selon figure 1) puis vers l'avant de la machine, de façon que le tube 21 se trouve, au repos, en avant du plan vertical passant par l'axe de la balle en formation et en-dessous de la paroi inférieure de la chambre de formation 1, ladite paroi étant généralement constituée par les courroies d'entraînement en rotation 10 qui contournent le dernier rouleau 14 de bas de porte.

Cette disposition s'explique par le fait que le tube 21 doit décrire, lorsque le dispositif d'éjection est actionné, une trajectoire telle que le tube soulève la balle tout en la repoussant vers l'arrière de la presse.

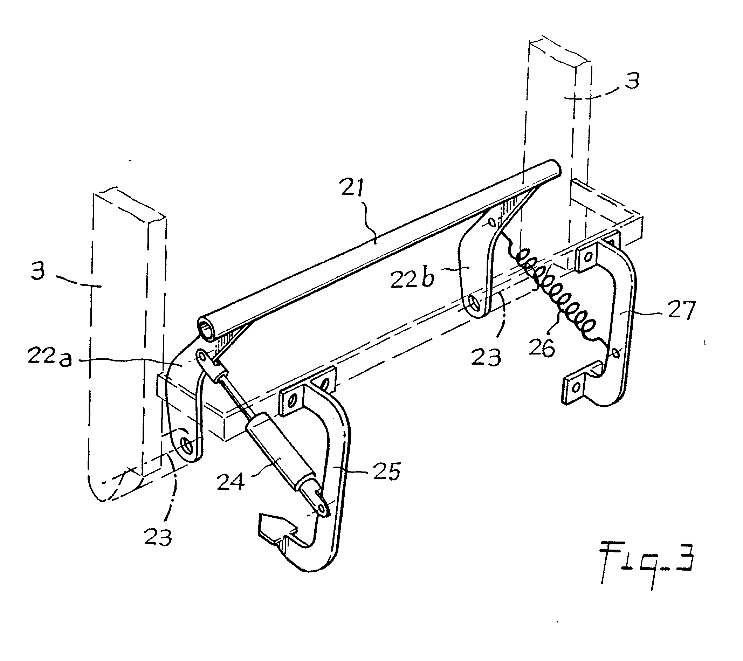

Ainsi qu'on le voit sur le dessin de la figure 3, le dispositif d'éjection comporte un vérin éjecteur 24 simple effet articulé d'une part sur l'un 22a des leviers 22 et d'autre part sur un support 25 fixé sur le châssis 3. Un ressort de rappel 26 relie l'autre levier 22b à un autre support 27 également fixé sur le châssis 3. Le dispositif peut fonctionner avec ou sans ressort.

Le vérin 24, lorsqu'il est alimenté par un fluide hydraulique sous pression, actionne le levier 22a et fait pivoter l'ensemble éjecteur composé du tube 21 et des leviers 22 autour de l'axe d'articulation 23 vers le haut et vers l'arrière. Ainsi la balle formée est soulevée par le tube 21, ce qui la déloge de son emplacement de formation, et repoussée vers l'arrière de la machine.

Conformément à l'invention, il est prévu que l'éjecteur ne soit actionné que lorsque la porte est totalement ou presque totalement ouverte. De la sorte, le passage libéré par l'ouverture de la porte est complètement dégagé lors de la sortie de la balle et celle-ci peut être éjectée rapidement par la brusque poussée du vérin éjecteur 24.

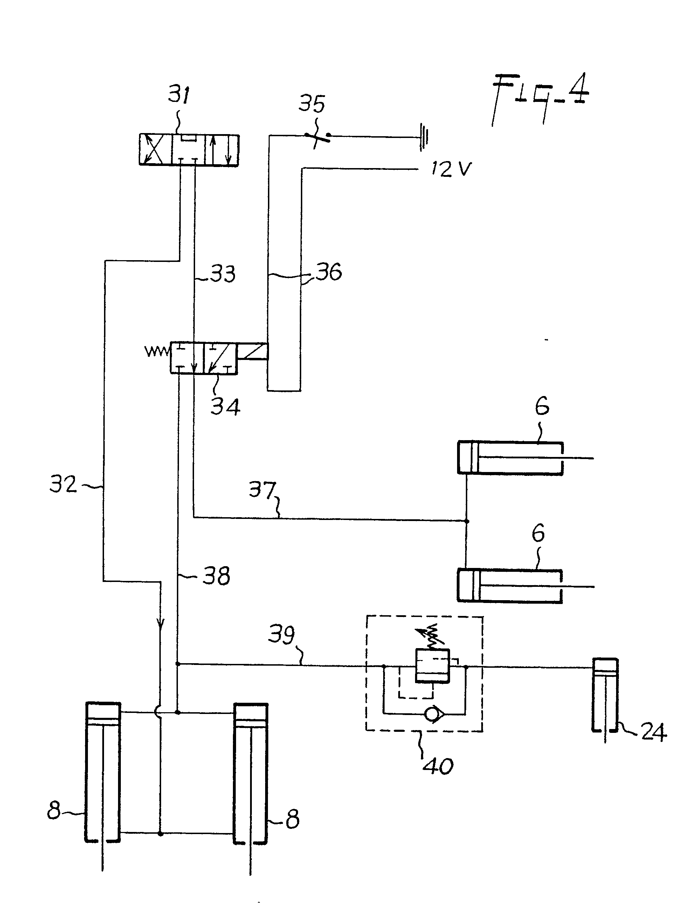

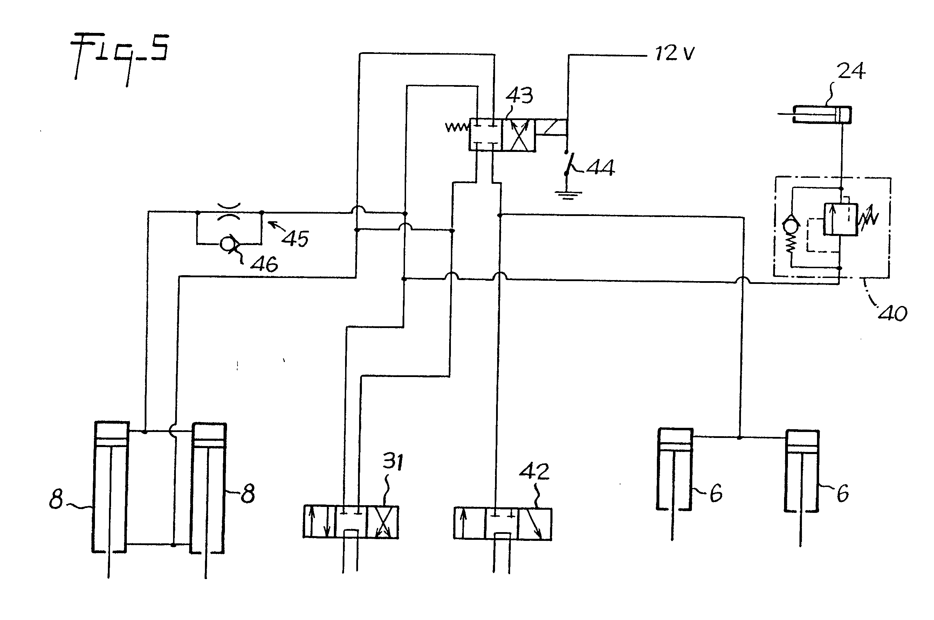

Le système assurant ce processus va être décrit en détail ci-dessous, en liaison avec les schémas hydrauliques des figures 4 et 5.

Le schéma de la figure 4 concerne un circuit hydraulique adapté au cas où le tracteur tirant la presse ne comporte qu'un seul distributeur double effet 31 de commande des organes hydrauliques de ladite presse. La source de fluide hydraulique sous pression est généralement une pompe hydraulique non représentée entraînée par le moteur du tracteur.

Les deux voies d'entrée du distributeur double effet 31 sont reliées respectivement à la pompe hydraulique et à un réservoir d'huile hydraulique. Une voie de sortie est reliée par une conduite 32 à la petite chambre de chaque vérin 8 d'ouverture de porte. L'autre voie de sortie est reliée par une conduite 33 à une électrovanne 34 montée sur la presse. Cette électrovanne 34 est alimentée par un circuit électrique 36 commande par un interrupteur 35 situé sur le tracteur et met en liaison la conduite 33 avec soit une conduite 37 alimentant les vérins de relevage 6 soit avec une conduite 38 alimentant les grandes chambres des vérins 8 d'ouverture de porte. Une tuyauterie 39 en dérivation sur la conduite 38 alimente une valve de séquence 40 avec clapet anti-retour à laquelle est reliée le vérin éjecteur 24.

Dans cette configuration, on peut obtenir sans commande de l'électrovanne 34 et par la manoeuvre du distributeur double effet 31 le relevage ou la descente de la machine, les vérins de relevage 6 étant alors alimentés par l'huile sous pression circulant dans les conduites 33 et 37.

Lorsqu'on commande l'électrovanne 34 au moyen de l'interrupteur 35 et que l'on manoeuvre le distributeur double effet 31, on obtient alors l'ouverture ou la fermeture de la porte par les vérins 8. Dans le cas de l'ouverture de la porte, on obtient également par l'intermédiaire de la valve de séquence 40 la commande du vérin éjecteur 24. Par exemple, le tracteur fournit de l'huile sous une pression de 175 bars et la valve de séquence 40 est réglée pour s'ouvrir à une pression de 170 bars environ. La pression nécessaire pour ouvrir la porte n'étant que de 100 bars, lorsque l'on va alimenter la grande chambre des vérins 8 d'ouverture de porte, celle-ci va s'ouvrir et lorsqu'elle sera pratiquement totalement ouverte, les vérins arrivant en fin de course, la pression va monter dans le circuit et les conduites 38 et 39. Lorsque la pression aura atteint 170 bars, la valve de séquence va s'ouvrir et l'huile sous pression alimentera le vérin d'éjection 21. Grâce à la valve de séquence 40, on obtient alors automatiquement le retard de l'éjection de la balle par rapport à l'ouverture de la porte.

Lorsque la fermeture de la porte est commandée par le distributeur double effet 31, le circuit d'alimentation du vérin éjecteur 24 est relié au réservoir et donc à pression nulle et le ressort 26 rappelle le tube éjecteur dans sa position de repos en chassant par le clapet anti-retour de la valve de séquence 40 l'huile contenue dans le vérin éjecteur 24 vers le retour au réservoir.

Bien entendu, les valeurs de pression indiquées ci-dessus n'ont été données qu'à titre d'exemple, ces valeurs dépendant des caractéristiques de la presse et du tracteur. On remarquera cependant qu'il est impératif, pour obtenir le décalage dans le temps souhaité entre les mouvements de la porte et de l'ensemble éjecteur, de régler la valve de séquence de sorte qu'elle s'ouvre à une pression nettement supérieure à la pression nécessaire à l'ouverture de la porte et bien sûr inférieure à la pression que peut fournir le tracteur.

Le schéma de la figure 5 représente un circuit hydraulique qui, tout en restant similaire dans son principe au circuit décrit ci-dessus, est adapté au cas où le tracteur est équipé d'un distributeur double effet 31 et d'un distributeur simple effet 42. L'électrovanne 43 est alors commandée par un interrupteur 44 monté sur la presse et actionné lors du déverrouillage de la porte, c'est-à-dire dès le début de son ouverture.

Dans cette version du circuit hydraulique, le distributeur simple effet 42 est relié directement aux vérins de relevage 6 et par la seule manoeuvre de ce distributeur 42 on obtient la montée ou la descente de la presse.

Par la manoeuvre du distributeur double effet 31 vers la position correspondant à l'ouverture de la porte, on dirige le fluide sous pression vers les grandes chambres de vérins 8 d'ouverture de porte à travers un clapet anti-retour 46 associé à un régulateur de débit 45. Dès que la porte est légèrement ouverte, l'interrupteur 44 se ferme et commande l'électrovanne 43. Le circuit sous pression est alors relié aux vérins de relevage et la presse monte automatiquement. De même que dans le cas du circuit de la figure 4, lorsque la pression atteint une valeur supérieure à la valeur de tarage de la valve de séquence 40, la porte étant alors complètement ouverte, on commande par le vérin éjecteur 24 l'extraction de la balle. En manoeuvrant le distributeur double effet 31 dans le sens de fermeture de porte, on obtient simultanément la descente de la machine, le retour de l'éjecteur dans sa position de repos grâce au ressort de rappel 26 et la fermeture de la porte, celle-ci étant freinée par le régulateur de débit 45. Lorsque la porte se verrouille en position fermée, l'interrupteur 44 s'ouvre et l'électrovanne 43 revient en position de repos.

Selon une réalisation particulière du dispositif, le retour en position de repos de l'éjecteur est réalisé seulement lorsque la porte arrive en fin de fermeture, par le rouleau de bas de porte 14 qui repousse ledit éjecteur hors de sa trajectoire vers l'avant de la machine et vers le bas. Dans ce cas, le ressort de rappel est supprimé.

Bien entendu, l'invention ne se limite pas aux circuits décrits ci-dessus à titre d'exemple. En particulier le dispositif pourra tout aussi bien être utilisé sur des presses ne possédant pas de systèmes de relevage machine. De même, les distributeurs, valves et électrovannes peuvent être de conception différente et les circuits agencés différemment dans la mesure où les fonctions décrites précédemment sont réalisées, en particulier en ce qui concerne l'impératif d'un retard de la commande de l'éjection par rapport à l'ouverture de la porte.

L'ensemble éjecteur composé des leviers 22 et du tube 21 pourra également être modifié sans sortir du cadre de l'invention. Par exemple, le nombre de leviers 22 pourra être augmenté, ou on pourra placer un vérin éjecteur au niveau de chaque levier pour éviter une déformation du tube 21 lors de l'éjection. On pourra également utiliser des vérins double effet et supprimer le ressort de rappel.

**Revendications**

1. Dispositif d'éjection d'une balle formée dans une presse à balles cylindriques comprenant une chambre de formation de la balle (1) et une porte arrière pivotante (2) articulée sur le bâti (3) de la presse, à ouverture commandée pour permettre l'éjection de la balle hors de la chambre de formation (1), le dispositif comportant un système éjecteur (20) constitué d'une barre ou tube (21) s'étendant parallèlement à l'axe de la balle et pouvant être actionné pour exercer sur ladite balle une force dirigée vers l'arrière de la presse, caractérisé en ce que le système éjecteur (20) est un système autonome ayant ledit tube (21) lié aux extrémités d'un ou plusieurs leviers (22) articulés sur le bâti (3) de la presse en dessous de la chambre de formation (1), qui agit sur la balle de façon à soulever celle-ci pour la dégager de la chambre de formation (1) et la repousser vers l'arrière et en ce que ledit système éjecteur (20) est actionné avec un temps de retard par rapport à l'ouverture de la porte (2) et seulement lorsque la porte (2) est au moins presque totalement ouverte.

2. Dispositif selon la revendication 1, caractérisé en ce qu'au moins un desdits leviers (22) est actionné par un vérin (24) dont une extrémité est articulée sur ledit levier (22), l'autre extrémité étant articulée sur le bâti (3).

3. Dispositif selon la revendication 2, caractérisé en ce que le vérin (24) d'actionnement du système éjecteur (20) est un vérin simple effet qui agit pour l'expulsion de la balle, et en ce qu'il comporte au moins un ressort de rappel (26) du système éjecteur (20).

4. Dispositif selon la revendication 2, caractérisé en ce que le vérin éjecteur (24) est un vérin simple effet et que le système éjecteur (20) est rappelé en position de repos par le rouleau de bas de porte (14) qui repousse l'éjecteur lorsque la porte (2) se ferme.

5. Dispositif selon l'une des revendications 2 à 4, caractérisé en ce que le vérin (24) d'actionnement du système éjecteur (20) est commandé par le circuit de manoeuvre des vérins (8) d'ouverture de porte (2).

6. Dispositif selon la revendication 5, caractérisé en ce que le circuit hydraulique d'alimentation du vérin éjecteur (24) comporte une valve (40) qui ne s'ouvre que lorsque la pression du circuit d'alimentation des vérins (8) d'ouverture de porte (2) devient supérieure à la pression nécessaire pour l'ouverture de ladite porte (2).

**Claims**

1. Device for the ejection of a bale formed in a cylindrical bale press comprising a bale forming chamber (1) and a pivoting rear door (2) hinged to the frame (3) of the press, with controlled opening to allow ejection of the bale from the bale forming chamber (1), the device comprising an ejector system (20) consisting of a bar or tube (21) extending parallel to the axis of the bale and capable of being actuated to exert on said bale a force directed towards the rear of the press, characterised in that the ejector system (20) is an autonomous system having said tube (21) connected to the ends of one or more levers (22) hinged to the frame (3) of the press beneath the bale forming chamber (1), which acts on the bale so as to raise it in order to release it from the bale forming chamber (1) and force it back rearwardly and in that said ejector system (20) is actuated with a time lag relative to opening of the door (2) and only when the door (2) is at least almost fully open.

2. Device according to claim 1, characterised in that at least one of said levers (22) is actuated by a cylinder (24) of which one end is hinged to said lever (22), the other end being hinged to the frame (3).

3. Device according to claim 2, characterised in that the cylinder (24) for actuating the ejector system (20) is a single-acting cylinder which acts to expel the bale, and in that it comprises at least one spring (26) for return of the ejector system (20).

4. Device according to claim 2, characterised in that the ejector cylinder (24) is a single-acting cylinder and that the ejector system (20) is returned to the inoperative position by the door bottom roller (14) which forces back the ejector when the door (2) closes.

5. Device according to any of claims 2 to 4, characterised in that the cylinder (24) for actuating the ejector system (20) is controlled by the circuit for operating the cylinders (8) for opening the door (2).

6. Device according to claim 5, characterised in that the hydraulic supply circuit of the ejector cylinder (24) comprises a valve (40) which opens only when the pressure of the circuit supplying the cylinders (8) which open the door (2) becomes greater than the pressure necessary to open said door (2).

**Patentansprüche**

1. Vorrichtung zum Auswerfen eines Ballens, gebildet in einer Presse für zylindrische Ballen, mit einer Kammer zur Erzeugung des Ballens (1) und einer schwenkbaren Pforte oder Hintertür (2), die auf dem Gestell (3) der Presse angelenkt ist, mit einer Öffnung, die gesteuert ist, um den Auswurf des Ballens aus der Erzeugungskammer (1) zu erlauben, wobei die Vorrichtung ein Auswurfsystem (20) aufweist, das von einem Balken oder einem Rohr (21) gebildet wird, das sich parallel zur Achse des Ballens erstreckt und betätigt werden kann, um auf den Ballen eine Kraft auszuüben, die nach der Hinterseite der Presse ausgerichtet ist, **dadurch gekennzeichnet, daß** das Auswurfsystem (20) ein autonomes System ist, welches das Rohr (21) in Verbindung hat mit den Enden eines oder mehrerer Hebel (22), die auf dem Gestell (3) der Presse unterhalb der Bildungskammer (1) angelenkt sind, die auf den Ballen derart wirkt, daß sie diesen anhebt, um die Bildungskammer (1) freizumachen und sie nach hinten zurückzustoßen, und daß das Auswurfsystem (20) mit einer Verzögerungszeit bezüglich der Öffnung der Pforte (2) betätigt wird und nur, wenn die Pforte (2) fast vollständig offen ist.

2. Vorrichtung nach Anspruch 1, **dadurch gekennzeichnet,** daß wenigstens einer der Hebel (22) durch einen Stelltrieb (24) betätigt wird, von dem ein Ende an dem Hebel (22) angelenkt ist, wobei das andere an dem Gestell (3) angelenkt ist.

3. Vorrichtung nach Anspruch 2, **dadurch gekennzeichnet,** daß der Stelltrieb (24) des Auswurfsystems (20) ein einfach wirkender Stelltrieb ist, der für den Auswurf des Ballens wirkt, und daß sie wenigstens eine Rückfeder (26) des Auswurfsystems (20) aufweist.

4. Vorrichtung nach Anspruch 2, **dadurch gekennzeichnet,** daß der Auswurfstelltrieb (24) ein einfach wirkender Stelltrieb ist, und daß das Aufwurfsystem (20) in die Ruhestellung zurückgeholt wird, durch die Basisrolle der Pforte (14), die den Auswerfer zurückdrückt, wenn die Pforte (2) sich schließt.

5. Vorrichtung nach einem der Ansprüche 2 bis 4, **dadurch gekennzeichnet,** daß der Betätigungsstelltrieb (24) des Auswurfsystems (20) durch den Betätitungskreis der Stelltriebe (8) der Öffnung der Pforte (2) gesteuert wird.

6. Vorrichtung nach Anspruch 5, **dadurch gekennzeichnet,** daß der hydraulische Zuführkreis des Auswurfstelltriebs (24) ein Ventil (40) aufweist, das sich nur öffnet, wenn der Druck des Zuführschaltkreises der Öffnungsstelltriebe (8) der Pforte (2) größer wird als der Druck, der notwendig ist für die Öffnung der Pforte (2).

Fig-1

Fig-2

EP 0 264 328 B1

Fig. 3

Fig-4

# Fig_5

12 V

43

44

24

45

46

40

8   8

31   42

6   6

EP 0 264 328 B1